# DEMANDE DE BREVET EUROPEEN

(11) **EP 1 387 553 A1**
(43) Date de publication de la demande: **04.02.2004**
(21) Numéro de dépôt: 03291728.8
(22) Date de dépôt: 11.07.2003
(51) Int. Cl.: H04L 29/14, H04L 12/46

(54) **Procédé pour fournir un ensemble de services élémentaires dans un réseau de télécommunications**

(30) Priorité: 01.08.2002 FR 0209816
(71) Demandeur: ALCATEL, 75008 Paris (FR)
(72) Inventeur: Delegue, Gérard, 94230 Cachan (FR); Papini, Hélène, 91400 Orsay (FR)
(74) Mandataire: Chaffraix, Sylvain

(57) **Abrégé**

L'invention concerne un procédé pour fournir un ensemble de services élémentaires d'utilisation d'un réseau de télécommunications qui, combinés entre eux, constituent des lots de services.

Il comprend les étapes suivantes:
- on constitue des groupes (123, 45) de services élémentaires (14, 24, 34₁, 35₁ ), et
- on active ou désactive les services d'un même groupe au cours d'une même transaction telle que les services élémentaires d'un groupe sont activables seulement lorsque tous les autres services élémentaires de ce groupe sont activables.

De préférence, lorsqu'un service élémentaire devient indisponible, les services élémentaires appartenant au même(s) groupe(s) que ce service élémentaire devenu indisponible sont rendus inactifs sauf s'ils appartiennent également à un autre groupe de services élémentaires tel que tous les services élémentaires qui constituent cet autre groupe de services élémentaires soient activés.

## Description

La présente invention se rapporte à un procédé pour fournir un ensemble de services élémentaires pour l'utilisation d'un réseau de télécommunications et à un serveur pour la mise en oeuvre de ce procédé.

Les opérateurs de télécommunications proposent souvent des lots de services pour utiliser leurs réseaux. Ces lots de services, que l'on appellera "services de haut niveau", sont constitués de services élémentaires. Les services élémentaires et les services de haut niveau sont en général définis dans des spécifications techniques de niveau de service quelquefois dénommées SLS ("Service Level Spécifications"). Dans ce qui suit ces spécifications seront, pour simplifier, dénommées "spécifications de service". Les informations contenues dans une spécification de service sont, par exemple, la date d'activation du service et des paramètres de qualités de services tels que le débit maximal du canal de transmission et son taux de disponibilité. Ainsi, la spécification d'un service de haut niveau correspond, dans certains cas, à la transcription technique du besoin du client du fournisseur de services.

Les fournisseurs de services d'un réseau de télécommunications proposent souvent une gamme de lots de services constituant des combinaisons diverses des services élémentaires dont ils disposent. Ces fournisseurs de services peuvent ainsi répondre au mieux aux besoins de leurs clients.

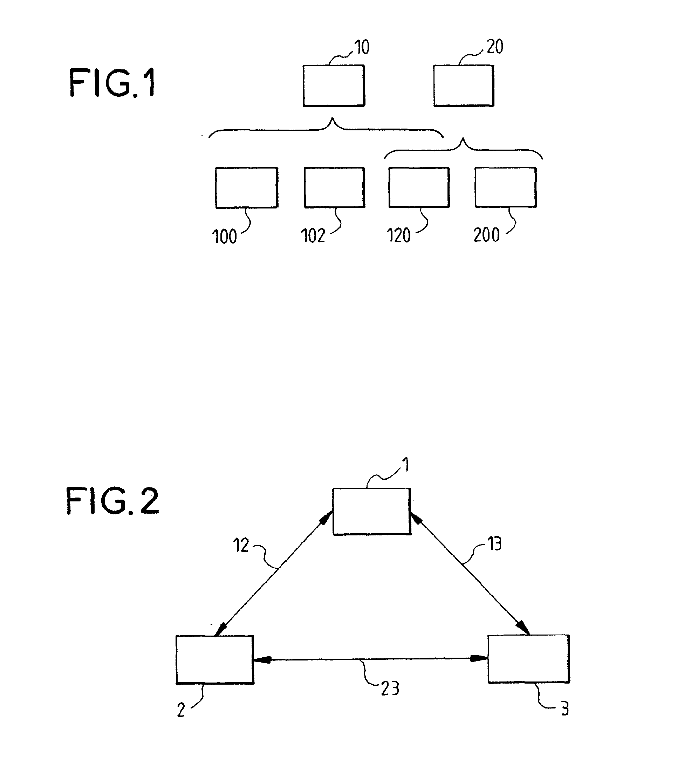

La figure 1 est un schéma représentant un exemple d'ensemble de services élémentaires 100, 102, 120 et 200 que l'on réunit pour former les lots de services 10 et 20.

L'invention résulte des constatations suivantes:

Certains des services élémentaires constituant un lot de services ne sont parfois pas activables à un moment donné, du fait, par exemple, que certaines ressources du réseau de télécommunications, telles qu'un serveur, ne sont pas disponibles suite à une panne ou à une opération de maintenance. Le fournisseur de services doit alors décider s'il active les autres services élémentaires qui constituent le service de haut niveau.

Dans certains cas, le souscripteur d'un service de haut niveau ne reçoit de son fournisseur de services aucun service, même si celui-ci est en mesure de lui fournir un service partiel.

Dans d'autres cas, il arrive que certains services élémentaires soient indispensables pour le fonctionnement d'un service de haut niveau de sorte que si l'un de ces services élémentaires est indisponible, le service de haut niveau ne peut pas être fourni, même si tous les autres services élémentaires sont activés. Dans ce cas, l'activation des autres services élémentaires qui constituent le service de haut niveau entraîne une mobilisation inutile de ressources, puisque le service de haut niveau ne peut pas être rendu.

Pour illustrer certains des inconvénients actuels qui ont été mentionnés, la figure 2 représente un service de haut niveau qui consiste à assurer une connexion en réseau de 3 sites 1, 2 et 3 d'une entreprise. Ce réseau est par exemple un réseau privé virtuel IP (IP-VPN). Le service de haut niveau est composé de services élémentaires qui sont, dans ce cas, les liens logiques 12, 13 et 23 entre les différents sites de l'entreprise. Dans un premier cas les sites 1 et 2 ont besoin, pour fonctionner, d'échanger des données à travers le lien logique 12. Le site 3 a besoin, lui, soit du lien logique 13 et du site 1 en fonctionnement, soit du lien logique 23 et du site 2 en fonctionnement. Si le lien logique 12 n'est pas disponible, les deux sites 1 et 2 ne peuvent pas fonctionner et par conséquent le site 3 non plus. Dans ce cas, si le fournisseur de services maintient les liens logiques 13 et 23 activés tandis que le lien logique 12 est désactivé, il bloque inutilement des ressources. Dans un autre cas, le site 1 a besoin d'échanger des données à travers les liens logiques 12 et 13 avec les sites 2 et 3. Cependant, le site 1 peut fonctionner en service réduit en échangeant des données uniquement avec le site 3. Dans ce deuxième cas, il serait intéressant pour l'entreprise, en cas d'indisponibilité du lien logique 12, de disposer du lien logique 13 afin de fonctionner en service réduit.

La présente invention remédie aux inconvénients mentionnés précédemment.

Elle concerne un procédé pour fournir un ensemble de services élémentaires qui peuvent être rendus par un réseau de communications et qui, combinés entre eux, constituent des lots de services, caractérisé en ce qu'il comprend les étapes suivantes:
- on constitue des groupes de services élémentaires, et
- on active ou désactive les services d'un même groupe au cours d'une même transaction telle que les services élémentaires d'un groupe sont activables seulement lorsque tous les autres services élémentaires de ce groupe sont activables.

Dans la pratique, les groupes de services élémentaires qui constituent un service de haut niveau sont définis par le fournisseur du service de haut niveau ou par le souscripteur du service de haut niveau.

On entend par transaction un ensemble d'opérations dont les effets se produisent seulement si toutes les opérations de cet ensemble réussissent. Ainsi, l'activation des différents services élémentaires d'un même groupe ne se produit que lorsque tous les services élémentaires de ce groupe sont en mesure d'être activés.

Avec l'invention, on évite une mobilisation inutile de ressources car, lorsqu'au moins l'un des services élémentaires n'est pas disponible, on n'active aucun des autres services élémentaires du même groupe.

En outre, le fait que l'un des services élémentaires ne soit pas activable se traduit par la non activation du ou des groupes auquel il appartient, mais non pas par la non activation du service de haut niveau en entier. De cette façon, la prestation de service peut être partielle. Le fournisseur ne délivre certes pas un service complet, mais il fournit au moins une partie du service.

Dans une réalisation de l'invention, lorsqu'un service élémentaire devient indisponible, les services élémentaires appartenant au même(s) groupe(s) que ce service élémentaire devenu indisponible sont rendus inactifs sauf s'ils appartiennent également à un autre groupe de services élémentaires tel que tous les services élémentaires qui constituent cet autre groupe de services élémentaires soient activés.

La présente invention s'applique donc également lorsqu'un service élémentaire devient indisponible alors qu'il est déjà activé.

Dans une réalisation, on affecte à chacun des services élémentaires d'un groupe un identifiant de groupe, cet identifiant de groupe étant, par exemple, un simple code ou la liste des services élémentaires qui font partie de ce groupe.

De préférence, cet identifiant de groupe est tel que deux groupes de services élémentaires différents sont associés à deux identifiants différents.

Dans une réalisation, l'identifiant associé à un groupe de services élémentaires est mémorisé dans chacune des spécifications des services élémentaires qui constituent le groupe de services élémentaires. Si un service élémentaire appartient à plusieurs groupes, on prévoit que la spécification de ce service élémentaire contienne autant d'identifiants différents qu'il y a de groupes différents auxquels le service élémentaire appartient.

Dans une réalisation tous les identifiants des groupes de services élémentaires qui constituent un service de haut niveau sont mémorisés dans la spécification de ce service de haut niveau.

L'invention concerne également un serveur comprenant des moyens pour commander l'activation ou la désactivation de services élémentaires en tenant compte, notamment, des ressources disponibles du réseau de télécommunications, de la spécification du service de haut niveau à fournir, des spécifications des services élémentaires qui constituent ledit service de haut niveau ainsi que de l'état activable ou actif des services élémentaires du réseau de télécommunications. Le serveur comprend des moyens pour activer et désactiver des services élémentaires, de manière que les services élémentaires d'un même groupe de services élémentaires soient activés ou désactivés au cours d'une même transaction, et de façon telle que les services élémentaires d'un même groupe soient activables seulement lorsque tous les services élémentaires de ce groupe sont activables.

Enfin, l'invention concerne aussi un serveur de télécommunications comprenant des moyens pour désactiver des services élémentaires d'un réseau de communications, ces services élémentaires formant des groupes. Lorsque l'un au moins desdits services élémentaires d'un groupe de services élémentaires devient indisponible, ce serveur de télécommunications est tel qu'il désactive, au cours d'une même transaction, tous les services du groupe de services élémentaires qui n'appartiennent pas également à au moins un autre groupe de services élémentaires dont les services élémentaires sont actifs.

D'autres caractéristiques et avantages de l'invention apparaîtront avec la description de certains de ses modes de réalisation effectuée ci-dessous, à titre non limitatif, en se référant aux dessins ci-annexés sur lesquels:
la figure 1, déjà décrite, représente schématiquement un ensemble de services élémentaires réunis de manière à former des lots de services,
la figure 2, déjà décrite, représente schématiquement un service de haut niveau fournissant une connexion en réseau de trois sites,
La figure 3, est un schéma représentant un service de haut niveau fournissant une connexion en réseau de cinq sites, et
la figure 4 est un schéma d'application du procédé selon l'invention.

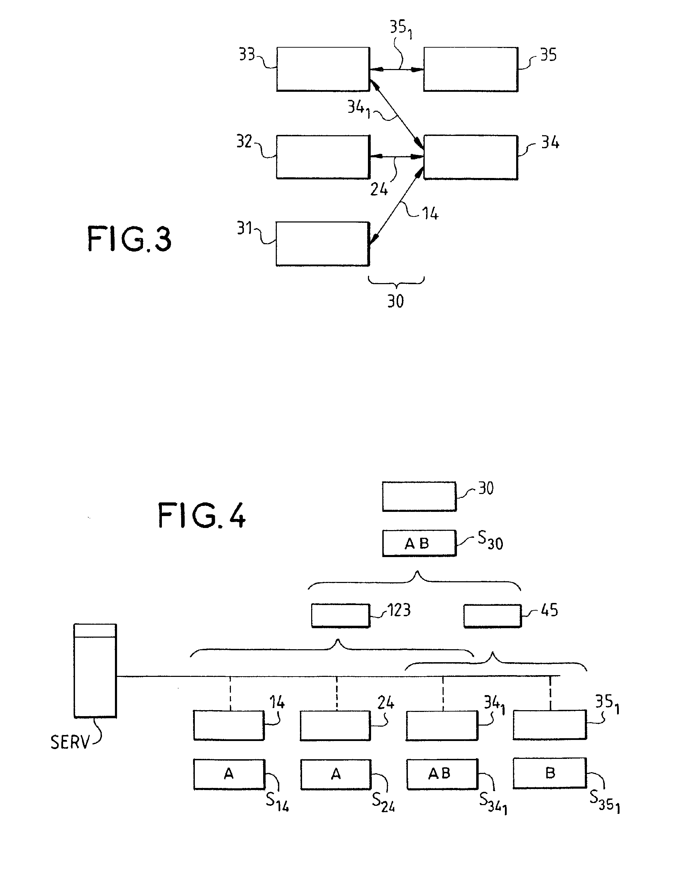

La figure 3 est un schéma d'un réseau privé virtuel IP (IP-VPN), correspondant à un service de haut niveau 30, qui relie cinq sites 31, 32, 33, 34 et 35 reliés par des services de liens logiques 14, 24, 34₁, et 35₁.
   Les sites 31, 32 et 35 sont autonomes: ils peuvent fonctionner indépendamment de l'état des différents services de lien logique. Par contre, pour fonctionner, le site 33 a besoin d'être relié aux sites 34 et 35 et le site 34 a besoin d'être relié aux sites 31, 32 et 33.
La figure 4 illustre la dépendance qui existe entre les services. Les services élémentaires 14, 24 et 34₁ appartiennent à un groupe 123 et les services élémentaires 34₁ et 35₁ appartiennent à un autre groupe de services élémentaires 45.

Tous ces services élémentaires constituent le service de haut niveau 30.

L'activation et la désactivation des services élémentaires sont commandés par le serveur SERV. On attribue au groupe 123 un identifiant A et on attribue au groupe 45 un identifiant B.

Enfin, chacun des services élémentaires 14, 24, 34₁, et 35₁ est défini par les spécifications S14, S24, S34₁ et S35₁, et le service de haut niveau 30 est défini par une spécification S30 contenant les identifiants A et B.

Les spécifications S14, S24 et S34₁ définissant les services élémentaires du groupe 123 contiennent toutes l'identifiant A du groupe 123. De même, les spécifications S34₁ et S35₁ définissant les services élémentaires du groupe 45 contiennent toutes l'identifiant B du groupe 45. Le service élémentaire 34₁ appartenant aux deux groupes 123 et 45, sa spécification S34₁ contient les identifiants A et B de ces deux groupes.

Pour activer le service de haut niveau 30, le serveur SERV commande l'activation des services élémentaires 14, 24, 34₁ et 35₁. Si l'activation du lien logique 24 est impossible (par exemple du fait d'une panne), au cours d'une première transaction, le serveur SERV n'activera ni le lien logique 14 qui appartient, comme le lien logique 24, au groupe 123 et qui n'appartient à aucun autre groupe, ni, pour la même raison, le lien logique 34₁.

Au cours d'une deuxième transaction, étant donné que les deux services élémentaires 34₁ et 35₁ du groupe 45 sont activables, le serveur SERV commandera l'activation de ces deux services 34₁ et 35₁. Ainsi, dans cet exemple, on fournit un service partiel malgré l'indisponibilité du service élémentaire 24, et des ressources telles que le lien logique 14 ne sont pas mobilisées inutilement.

## Revendications

1. Procédé pour fournir un ensemble de services élémentaires d'utilisation d'un réseau de télécommunications qui, combinés entre eux, constituent des lots de services, **caractérisé en ce qu'**il comprend les étapes suivantes:
- on constitue des groupes (123, 45) de services élémentaires (14, 24, 34₁, 35₁ ), et
- on active ou désactive les services d'un même groupe au cours d'une même transaction telle que les services élémentaires d'un groupe sont activables seulement lorsque tous les autres services élémentaires de ce groupe sont activables.

2. Procédé selon la revendication 1 **caractérisé en ce que** lorsqu'un service élémentaire devient indisponible, les services élémentaires appartenant au même (s) groupe(s) que ce service élémentaire devenu indisponible sont rendus inactifs sauf s'ils appartiennent également à un autre groupe de services élémentaires tel que tous les services élémentaires qui constituent cet autre groupe de services élémentaires soient activés.

3. Procédé selon la revendication 1 ou 2 **caractérisé en ce qu'**à chacun des services élémentaires d'un groupe on affecte un identifiant de groupe.

4. Procédé selon la revendication 3 **caractérisé en ce que** l'identifiant d'un groupe de services élémentaires est mémorisé dans toutes les spécifications des services élémentaires appartenant à ce groupe.

5. Serveur comprenant des moyens pour fournir un ensemble de services élémentaires pour l'utilisation d'un réseau de télécommunications qui, combinés entre eux, constituent des lots de services, **caractérisé en ce que**, les services élémentaires étant réunis en groupes de services élémentaires,
- il comprend des moyens pour activer ou désactiver les services d'un même groupe au cours d'une même transaction, et
- il comprend des moyens pour que la transaction soit telle que les services élémentaires d'un groupe soient activables seulement lorsque tous les autres services élémentaires de ce groupe sont activables.

6. Serveur comprenant des moyens pour désactiver des services élémentaires d'un réseau de télécommunications qui, combinés entre eux, constituent des lots de services, **caractérisé en ce que**, les services élémentaires étant réunis en groupes de services élémentaires, il comprend des moyens pour désactiver, au cours d'une même transaction, lorsque l'un au moins desdits services élémentaires d'un groupe de services élémentaires devient indisponible, tous les services du groupe de services élémentaires qui n'appartiennent pas également à au moins un autre groupe de services élémentaires tel que tous les services élémentaires qui constituent cet autre groupe de services élémentaires soient activés.
